Europäisches Patentamt

European Patent Office

Office européen des brevets

(19)

(11) **EP 0 493 246 B1**

(12) **FASCICULE DE BREVET EUROPEEN**

(45) Date de publication et mention
de la délivrance du brevet:
**17.07.1996 Bulletin 1996/29**

(51) Int Cl.$^6$: **G01K 15/00**

(21) Numéro de dépôt: **91403527.4**

(22) Date de dépôt: **23.12.1991**

(54) **Méthode de test de chaînes de température et testeur utilisant cette méthode**

Verfahren zum Prüfen von Temperaturmesschaltungen und Prüfer die dieses Verfahren anwendet

Testing method for temperature measuring circuits and tester using this method

(84) Etats contractants désignés:
**CH DE LI SE**

(30) Priorité: **28.12.1990 FR 9016471**

(43) Date de publication de la demande:
**01.07.1992 Bulletin 1992/27**

(73) Titulaire: **FRAMATOME**
**92400 Courbevoie (FR)**

(72) Inventeur: **Caroli, Serge**
**F-92084 Paris La Défense (FR)**

(74) Mandataire: **Bourely, Paul**
**SOSPI**
**14-16, rue de la Baume**
**75008 Paris (FR)**

(56) Documents cités:
**US-A- 4 122 719          US-A- 4 532 601**
**US-A- 4 901 257**

• **MEASUREMENT TECHNIQUES. vol. 28, no. 2,**
**Février 1985, NEW YORK US pages 174 - 176;**
**L.A.GUDA E.A.: "AUTOMATIC CALIBRATION**
**OFRESISTANCE THERMOMETERS USING"**

**Description**

L'invention concerne une méthode de test de chaînes de température et un testeur pour la mise en oeuvre de cette méthode.

Dans les complexes industriels, il se pose le problème du contrôle de certains paramètres caractéristiques du bon déroulement d'un processus (thermique, chimique, etc.). Il est important de pouvoir contrôler ces paramètres à des étapes déterminées du processus au moyen de systèmes de mesure de ces paramètres.

A un système de mesure considéré correspond une chaîne de mesure qui représente la suite des éléments du système de mesure sous l'angle du chemin parcouru par un signal de mesure depuis l'entrée (signal d'entrée) jusqu'à la sortie (signal de sortie).

Il en va ainsi pour la mesure des températures à différents endroits d'un ensemble d'éléments ou de machines associés pour mener à bien un processus déterminé, notamment dans les centrales nucléaires où la température est un paramètre qui doit être contrôlé en permanence.

Il existe dans ce cas des chaînes de mesure de la température pour le circuit primaire, le circuit secondaire et le coeur du réacteur. Le contrôle de la température est, dans ce domaine, d'une importance essentielle et il est donc impératif de contrôler le bon fonctionnement des chaînes de température. Les éléments importants à contrôler dans une chaîne de mesure de température sont d'abord les thermosondes qui sont les éléments les plus susceptibles de subir des altérations. Les convertisseurs, qui permettent l'adaptation des signaux délivrés par les thermosondes au reste de la chaîne de mesure, doivent aussi être contrôlés avec soin.

Lors des opérations de maintenance, il est d'usage de tester les capteurs de température par des moyens traditionnels d'essais tels que :

- un multimètre numérique intégrateur pour la mesure directe de résistance des thermosondes,
- des boîtes à décades pour la simulation de résistances et un voltmètre numérique pour le réglage des convertisseurs.

Les liaisons électriques nécessaires à ces essais sont réalisées au moyen de fils volants.

Ces divers moyens d'essais présentent l'inconvénient d'être utilisés par des techniciens très qualifiés et nécessitent un temps relativement long de mise en oeuvre ce qui augmente considérablement le coût de la maintenance. En effet, les systèmes nécessitent à chaque intervention un câblage particulier.

On connaît des dispositifs de calibrage automatique pour des systèmes de mesure de température.

Ainsi, selon le brevet US-A-4 532 601, le calibrage s'effectue sans interrompre le circuit de mesure en utilisant des commutateurs qui permettent de substituer aux circuits de mesure de température une tension de référence. L'ensemble est commandé par un microprocesseur. Outre le fait que la chaîne de mesure doive être conçue initialement pour réaliser le test, cette solution ne permet pas de vérifier séparément le bon fonctionnement des convertisseurs ni de mesurer des résistances ou des tensions indépendamment des convertisseurs.

Le brevet US-A-4 901 257 décrit un système portable pour calibrer des sondes de température. Un boîtier prévu pour recevoir la sonde à tester est muni d'une source de chaleur pouvant fonctionner au-dessus et au-dessous de la température ambiante. Cette source est régulée en fonction de températures de consigne. Ce système n'est toutefois pas prévu pour mesurer directement des résistances de thermosonde ni pour tester séparément des convertisseurs. De plus, le test des sondes nécessite leur démontage de la chaîne de température.

Le brevet US-A- 4 122 719 décrit un système de mesure de température conçu pour compenser les dérives des composants électroniques, tels que source de courant qui constituent le système. Les dérives sont mesurées lors d'opérations de calibrage consistant à placer les sondes à des températures connues. On fait alors coïncider les valeurs affichées avec ces valeurs connues.

Le système peut ainsi ajuster automatiquement les coefficients servant à calculer la température en fonction des résistances électriques des sondes.

Ce système intègre donc la mesure des températures et son propre calibrage mais il nécessite le démontage des sondes à calibrer.

L'invention a pour but de remédier aux inconvénients des solutions antérieures en proposant une méthode de test et un testeur qui sont d'utilisation simplifiée et pouvant être adaptés à des chaînes de température non spécifiquement conçues pour être testées de façon automatique.

Dans ce but, le testeur de chaînes de température selon l'invention intègre des fonctions de simulation de résistance, de mesure de résistance, de mesure de tension et de traitement de données.

Il permet d'obtenir par une seule connexion l'ensemble des mesures, soit :

- la mesure de la résistance d'isolement par rapport à la terre électrique de la sonde sans risque pour l'intégrité de la sonde,

- la mesure de la résistance de chaque fil de la ligne de liaison sonde-convertisseur pour mettre en évidence les déséquilibres éventuels de lignes dus à des défauts de connexion,
- la simulation des valeurs de résistance et l'acquisition des signaux de tension pour la vérification et le calibrage du convertisseur,
- le relevé de la valeur de résistance de sonde (avec une précision qui correspond à une valeur de 0,05°C) quel que soit le palier de température auquel est soumise la sonde (par exemple pour le circuit primaire d'un réacteur nucléaire),
- l'enregistrement des données d'essais successifs et l'édition à la demande des mêmes données sous forme de fiche d'essai, ce qui permet d'effectuer des comparaisons de mesures entre les différentes campagnes de maintenance et de détecter les écarts caractéristiques précurseurs des défaillances des capteurs.

L'invention a donc pour objet une méthode de test de chaînes de température, une chaîne comportant une thermosonde et un convertisseur reliant la thermosonde au reste de la chaîne, la méthode comportant des opérations de simulation de résistances, et de mesure de tensions et de résistances, caractérisée en ce que la méthode comprend les étapes suivantes :

- retrait du convertisseur de la chaîne de température,
- branchement en sortie de la thermosonde des entrées d'un module de raccordement dont les sorties sont connectées à de premières entrées d'un multiplexeur,
- branchement aux entrées du convertisseur des sorties d'un simulateur de résistances, les sorties du convertisseur étant reliées à de secondes entrées du multiplexeur,
- test automatisé de la thermosonde et de son convertisseur mené par un calculateur gérant le simulateur de résistances, les mesureurs de tensions et de résistances par l'intermédiaire du multiplexeur.

L'invention a encore pour objet un testeur de chaînes de température, une chaîne comportant une thermosonde et un convertisseur reliant la thermosonde au reste de la chaîne, le testeur comprenant des moyens de simulation de résistances et des moyens de mesures de tensions et de résistances, caractérisé en ce que le testeur comprend :

- au moins un module de raccordement reliant les sorties de thermosonde à de premières entrées d'un multiplexeur,
- au moins un simulateur de résistances branché aux entrées d'un convertisseur, les sorties du convertisseur étant reliées à de secondes entrées du multiplexeur,
- un calculateur pour gérer le simulateur de résistances, les mesureurs de tensions et de résistances par l'intermédiaire du multiplexeur.

L'invention sera mieux comprise et d'autres avantages apparaîtront à la lecture de la description qui va suivre, donnée à titre non limitatif, accompagnée des dessins annexés parmi lesquels :

- la figure 1 représente un testeur de chaînes de température selon l'invention,
- la figure 2 est un schéma électrique d'un circuit de mesure d'une résistance d'isolement,
- les figures 3 à 9 représentent des diagrammes d'opérations successives utilisés par le testeur selon l'invention.

Dans l'application aux chaînes de mesure de température pour les réacteurs nucléaires à eau pressurisée par exemple, le testeur selon l'invention peut se présenter sous la forme d'un banc de métrologie mobile destiné au contrôle dans le cadre de la maintenance annuelle.

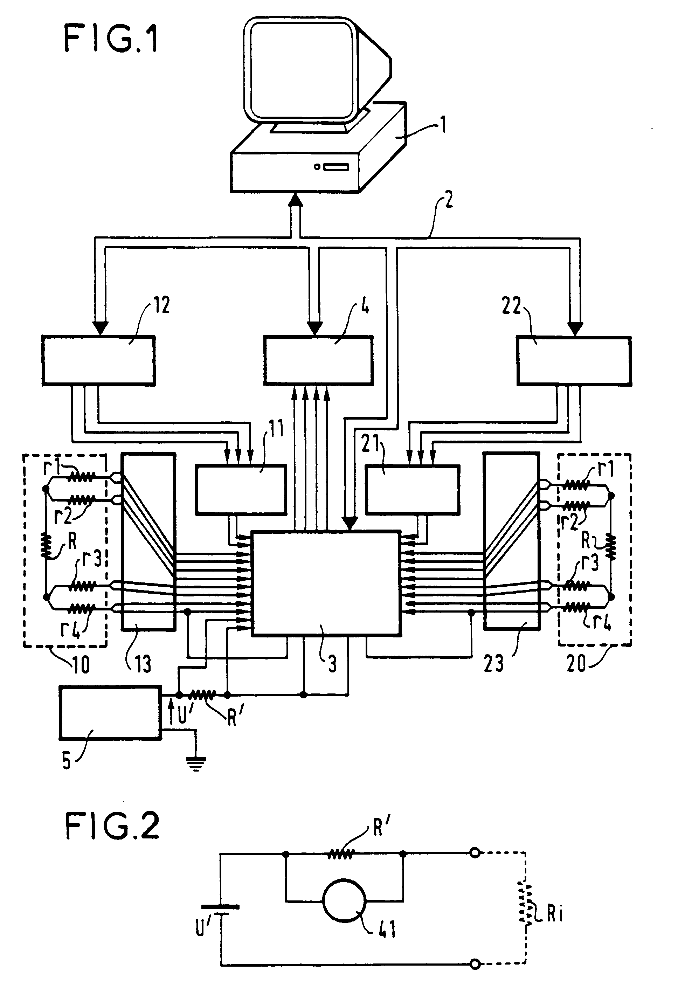

La figure 1 représente, sous forme fonctionnelle, un tel banc de métrologie. Il est destiné au contrôle simultané de deux thermosondes 10 et 20 et des convertisseurs associés 11 et 21. Le banc comprend un calculateur 1 gérant, par l'intermédiaire d'un bus 2, un multiplexeur 3, des simulateurs de résistances 12 (pour le convertisseur 11) et 22 (pour le convertisseur 21), un dispositif de mesure 4 regroupant les fonctions de voltmètre et d'ohmmètre. Le banc comprend encore une source de tension continue 5.

Les convertisseurs 11 et 21 ont été retirés de leurs emplacements dans les chaînes de mesure, respectivement en sortie des thermosondes 10 et 20. Ils ont été remplacés par des modules de raccordement respectivement 13 et 23. Ces modules sont des cartes équipées de pistes de liaison électrique permettant de relier les sorties des thermosondes à des entrées du multiplexeur 3. Ainsi chaque sortie de thermosonde peut être reliée à deux entrées du multiplexeur.

Les convertisseurs 11 et 21 sont mis en place sur le banc de façon que leurs entrées soient réunies aux sorties des simulateurs de résistances (respectivement 12 et 22) et que leurs sorties soient réunies à des entrées du multiplexeur 3.

Les sorties du multiplexeur sont reliées au dispositif de mesure 4.

Pour répondre au critère d'automatisation de l'application, il est avantageux d'employer des appareils télécommandables au standard IEEE-488 qui présente la possibilité d'une extension future importante à la fois pour le nombre de voies gérées et pour le type d'appareils connectés. L'utilisation du standard IEEE-488 permet aussi, avec quelques adaptations, l'emploi de matériel de provenances diverses. Pour la partie informatique de l'application, le choix d'un PC paraît s'imposer au vu du grand nombre de logiciels fonctionnant sous le système d'exploitation standard MS-DOS (Micro Soft Disk Operating System).

Sur la figure 1, on a représenté les thermosondes quatre fils sous la forme d'une résistance R de la sonde proprement dite et de quatre résistances $r_1$, $r_2$, $r_3$ et $r_4$ pour les fils.

Pour l'application choisie, on utilise deux types de sondes selon les gammes de température à contrôler : les sondes "gamme étroite" et les sondes "gamme large". Les premières sont systématiquement étalonnées en laboratoire. A partir de trois points de mesure, on détermine les coefficients de calibrage entrant dans une équation théorique du second degré. Les coefficients de calibrage sont différents d'un constructeur à l'autre. Les secondes sondes ne sont pas étalonnées en laboratoire. Elles répondent à la norme DIN 43760. L'équation théorique est également une courbe du second degré. On constitue donc un fichier "sondes" contenant les coefficients de calibrage de chaque sonde. Ce fichier sera particularisé à chaque tranche. Les coefficients de calibrage seront ceux fournis par le constructeur sur les fiches d'étalonnage. Le logiciel transformera ces coefficients afin que chaque sonde puisse répondre à une équation de la forme :

$$R = R_o \, (1 + At + Bt^2)$$

$R_o$ étant la température de la résistance de sonde à 0°C, A et B les coefficients de calibrage et t la température.

Pour mesurer les résistances de lignes $r_1$, $r_2$, $r_3$ et $r_4$, d'une thermosonde, on mesure les valeurs résistives que présentent les sorties de la thermosonde prises deux à deux. On obtient le système d'équations suivantes qu'il faut résoudre :

$$r_1 + r_2 = X$$

$$r_3 + r_4 = Y$$

$$r_2 + R + r_4 = Z$$

$$r_1 + R + r_3 = W$$

$$r_2 + R + r_3 = T$$

où X, Y, Z, W et T sont les mesures faites des grandeurs du premier membre. Il vient :

$$r_1 = (X + W - T)/2$$

$$r_2 = (X - W + T)/2$$

$$r_3 = (Y - Z + T)/2$$

$$r_4 = (Y + Z - T)/2$$

Il vient aussi : $R = (Z - X + W - Y)/2$

Le déséquilibre de lignes est donné par :

$$r_1 - r_4 = (X + W - Y - Z)/2.$$

La mesure de la résistance d'isolement $R_i$ d'une thermosonde peut se faire par mesure de la résistance de fuite entre la sonde et la terre sous une tension U'. La précision requise pour cette mesure est faible. On peut donc réaliser la mesure à l'aide des instruments déjà en place en utilisant la source de tension continue 5 délivrant une tension U'. La mesure peut se faire en mettant en oeuvre le schéma de la figure 2, R' étant une résistance de valeur connue aux bornes de laquelle est branché un voltmètre 41. Dans ces conditions, la résistance d'isolement $R_i$ vaut :

$$R_i = (R'.U')/U - R'$$

U étant la tension mesurée par le voltmètre 41. A titre d'exemple, U' peut être choisie égale à 48 volts et R' égale à 48 kiloohms.

Sur la figure 1, on a fait figurer les moyens mis en oeuvre pour mesurer les résistances d'isolement des sondes 10 et 20 : la source de tension 5 délivrant une tension U', la résistance R' branchée en série dans le circuit, la mesure de la tension aux bornes de R' se faisant par le dispositif de mesure 4 en fonction voltmètre par l'intermédiaire du multiplexeur 3. La commutation de la chaîne d'acquisition sur la mesure de résistance d'isolement peut se faire au moyen d'interrupteurs commandables IEEE-488. On peut à cet effet utiliser comme multiplexeur celui référencé HP 3488 chez Hewlett-Packard qui dispose d'interrupteurs commandables (option 011).

Les autres appareils mentionnés à la figure 1 peuvent être les suivants :

- pour le calculateur 1 : un ensemble micro-ordinateur compatible PC-AT avec une carte 68000 HP BASIC,
- pour le dispositif de mesure 4 : le multimètre HP 3457 A,
- pour les simulateurs de résistances 12 et 22 : le simulateur de résistances PN 5207 P de la société AOIP.

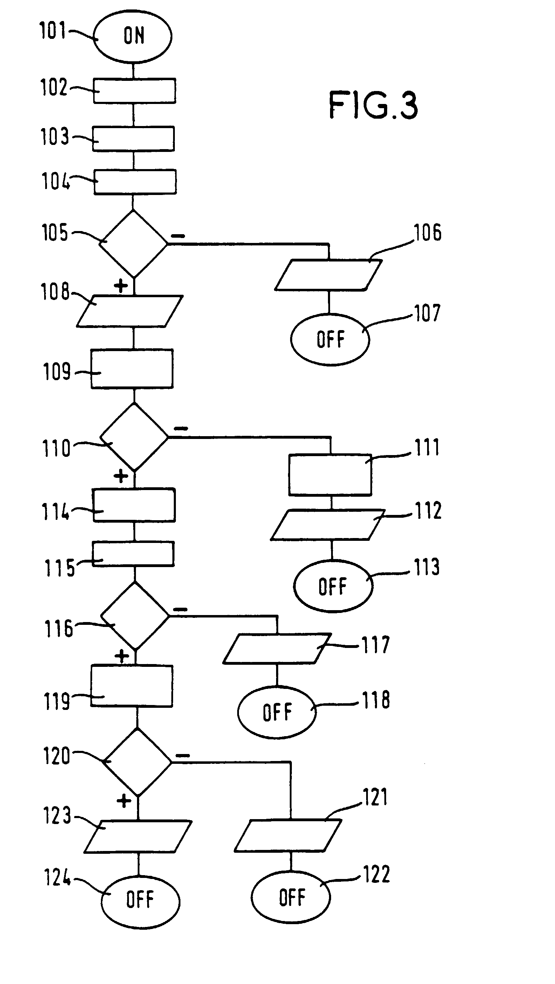

Sur la figure 3, on a représenté le diagramme des opérations successives mises en oeuvre pour tester une thermosonde, ses résistances de lignes et sa résistance d'isolement. Les paramètres à entrer sont les informations concernant la sonde c'est-à-dire le numéro d'ordre de la branche dans une chaîne à deux branches et les valeurs $R_o$, A et B de la thermosonde. Les opérations se succèdent de la manière suivante en fonction des références portées sur le diagramme :

- en 101, on commence (ON) le test
- en 102, on effectue les initialisations dont les appareils au standard IEEE
- en 103, on ferme l'interrupteur (option 011 du multiplexeur) correspondant à la sonde à mesurer et le multimètre 4 (en position voltmètre) mesure la tension aux bornes de R'
- en 104, la résistance d'isolement $R_i$ est calculée
- en 105, on s'assure de la valeur de la résistance d'isolement
- si la résistance d'isolement est mauvaise (-) on passe en 106 qui provoque l'affichage de la mention "perte d'isolement sur la sonde N°       et on passe en 107 pour l'achèvement du test (OFF)
- si la résistance d'isolement est bonne (+) on passe en 108 pour afficher ce résultat et on saisit la température ambiante
- en 109, on mesure les cinq résistances X, Y, Z, W et T
- en 110, on s'assure que les valeurs relevées sont ou non des valeurs finies
- en cas de réponse négative (-), on passe en 111 qui ordonne de remplacer les valeurs finies par "0" et les valeurs infinies par "1" afin de déterminer la liaison défectueuse en exécutant le calcul identique à celui effectué en 114. Chaque fois qu'une résistance est trouvée égale à "1", cela équivaut à la rupture de la liaison correspondante.
- en 112, on affiche la liaison défectueuse et on passe en 113 pour l'achèvement du test (OFF)
- en cas de réponse positive (+), on passe en 114 pour calculer les résistances de lignes $r_1$, $r_2$, $r_3$, $r_4$ et la résistance de sonde R
- en 115, on calcule la résistance R pour la température ambiante
- en 116, on compare la résistance R mesurée de la sonde et la valeur à température ambiante
- en cas de réponse non satisfaisante (-), on passe en 117 pour l'affichage de la mention "dérive R sonde" puis en 118 pour l'achèvement du test (OFF)
- en cas de réponse satisfaisante (+), on passe en 119 pour le calcul du déséquilibre de lignes
- en 120, on teste la valeur de déséquilibre
- en cas de réponse non satisfaisante (-), on passe en 121 pour l'affichage du déséquilibre de lignes, puis en 122 pour l'achèvement du test (OFF)
- en cas de réponse satisfaisante (+), on passe en 123 pour l'affichage de la mention "vérification OK" et des valeurs trouvées, et éventuellement l'indication de la précision des mesures
- en 124, on termine le test (OFF).

Le convertisseur de température a pour rôle d'effectuer une adaptation du phénomène physique délivré par la thermosonde aux opérations ultérieures de la chaîne de mesure. Dans le cas d'un élément passif comme la thermosonde, on n'obtient un signal électrique que si l'élément est alimenté par une source d'énergie extérieure. Cette conversion est par exemple réalisée par un montage en pont. Utilisé en tant que convertisseur de mesure, le pont de Wheatstone a pour rôle de transformer une variation d'impédance en un signal électrique.

Les chaînes de température utilisent des signaux en tension variant linéairement avec la température dans des gammes fixes telles que : 1 - 5 volts pour une gamme de température allant de 260 à 330°C par exemple. C'est le convertisseur de température qui est chargé d'adapter ce signal de résistance (qui varie de façon quadratique en fonction de la température) en signal de tension, moyennant donc une erreur de linéarisation (ou conformité) qui sera minimisée par le choix de la droite de calibrage du convertisseur. Une telle adaptation utilise comme premier étage le montage en pont de Wheatstone qui résulte de l'association de deux montages potentiométriques dont le rôle est de mesurer la résistance variable et de linéariser le signal.

Une vérification complète ou un réglage (après un changement de sonde par exemple) de convertisseur nécessitent la simulation de plusieurs valeurs de résistances. Une vérification globale peut se faire en un seul point. La mise en oeuvre des résistances de simulation se fait en procédant au remplacement de la sonde de mesure et en injectant des valeurs étalons.

Les points de simulation comprennent obligatoirement les deux points limites (0 et 100% de l'étendue d'échelle). Les autres points sont :

- des points pris par exemple à intervalles réguliers pour le réglage des convertisseurs,
- des points remarquables importants pour la conduite (valeurs dites "de process") et pour la mise en oeuvre des seuils de sécurité : l'un des points choisis est obligatoirement le point d'arrêt à chaud qui est un point où l'on a généralement toute latitude et tout le temps nécessaire pour effectuer les vérifications et les réglages,
- des valeurs qui sont nécessaires pour permettre le réglage des sommateurs de chaînes (autre avantage du testeur).

La courbe de réponse d'un convertisseur de température est une droite réglable par deux potentiomètres :

- un potentiomètre de zéro agissant sur l'abscisse à l'origine,
- un potentiomètre d'échelle agissant sur la pente de la droite.

Les deux réglages ne sont pas absolument indépendants et réagissent l'un sur l'autre, ce qui oblige à effectuer plusieurs opérations successives de réglage.

La droite de calibrage du convertisseur est déterminée en prenant en compte deux aspects :

- la droite théorique déterminée par la méthode des moindres carrés en linéarisant la courbe théorique de la sonde dans la gamme de mesure du convertisseur,
- l'écart entre la droite déterminée précédemment et d'autres droites en prenant en compte des points "process" particuliers.

Ainsi deux températures remarquables seront déterminées : $t_1$ et $t_2$, avec $t_2$ supérieure à $t_1$.

La procédure de réglage d'un convertisseur se déroule de la façon suivante :

a/ calcul des résistances $R_1$ et $R_2$ correspondant aux points $t_1$ et $t_2$ en utilisant pour chaque sonde la formule :

$$R = R_o \ (1 + At + Bt^2)$$

b/ calcul de l'équation de la droite $R = at + b$ (a et b étant des constantes) passant par $(t_1, R_1)$ et $(t_2, R_2)$

$$a = (R_2 - R_1) / (t_2 - t_1)$$

$$b = (R_1 \ t_2 - R_2 \ t_1) / (t_2 - t_1)$$

c/ calcul de R (0%) et R (100%) correspondant aux points extrêmes de l'étendue d'échelle du convertisseur un utilisant la formule :

$$R = at + b$$

d/ simulation de R (0%) et R (100%) puis action sur les potentiomètres de zéro et d'étendue d'échelle jusqu'à ce que les tensions lues en face avant des convertisseurs soient égales aux valeurs théoriques à la précision près de l'étalonnage du module.

e/ simulation des autres points en utilisant la formule $R = at + b$ et vérification de la conformité des valeurs lues avec la précision du module.

f/ si l'un des points simulés et hors tolérance on procédera à une retouche des potentiomètres selon d/.

La vérification se fera en plusieurs points remarquables (par exemple le point du palier nominal d'arrêt à chaud) en calculant la valeur R à partir de la courbe $R = at + b$. Si le module est hors tolérance on retrouve le cas précédent.

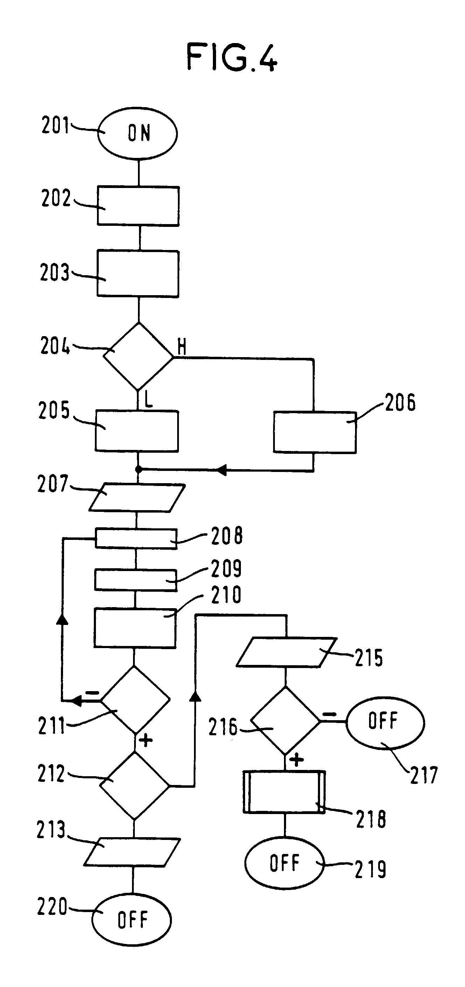

Sur la figure 4, on a représenté le diagramme des opérations successives mises en oeuvre pour vérifier un convertisseur. Les opérations se succèdent de la manière suivante en fonction des références portées sur le diagramme :

- en 201, on valide (ON) le cycle de vérification
- en 202, on effectue les initialisations dont les appareils au standard IEEE. Les paramètres d'entrée sont les informations concernant la sonde, c'est-à-dire les valeurs $R_o$, A et B, les indications concernant le bas de gamme (BG) et le haut de gamme (HG) de température, les températures d'interpolation basse (TB) et haute (TH), le choix de la gamme de tension du convertisseur (H ou L), le numéro d'ordre du convertisseur dans la chaîne lorsque celle-ci comprend deux branches.

- en 203, on effectue le calcul des deux résistances d'interpolation et le calcul des cinq résistances de la droite de linéarisation R(i)
- en 204, on choisit la gamme du convertisseur
- en 205 ou 206, on convertit les résistances en tensions attendues V(i)
- en 207, on affiche la droite calculée
- en 208, on incrémente i
- en 209, on progamme (R(i)
- en 210, après une temporisation de 0,3 seconde, on effectue la lecture de la tension V'(i) qui est la tension réelle mesurée
- en 211, on s'assure si l'itération est terminée. Si elle n'est pas terminée (-), on revient en 208. Si elle est terminée (+), on passe en 212.
- en 212, on effectue la comparaison entre les valeurs mesurées des tensions et les valeurs théoriques
- en 213, on provoque l'affichage de la mension "vérification OK" si la comparaison est bonne et en 214, on termine le test (OFF)
- en 215, on provoque l'affichage de la mention "mauvaise vérification"
- en 216, on choisit ou non de faire une calibration du convertisseur
- si on ne choisit pas de calibrer (-), on termine le test en 217 (OFF)
- si on choisit de calibrer (+), on passe en 218 au module "calibration"
- en 219, la calibration est terminée.

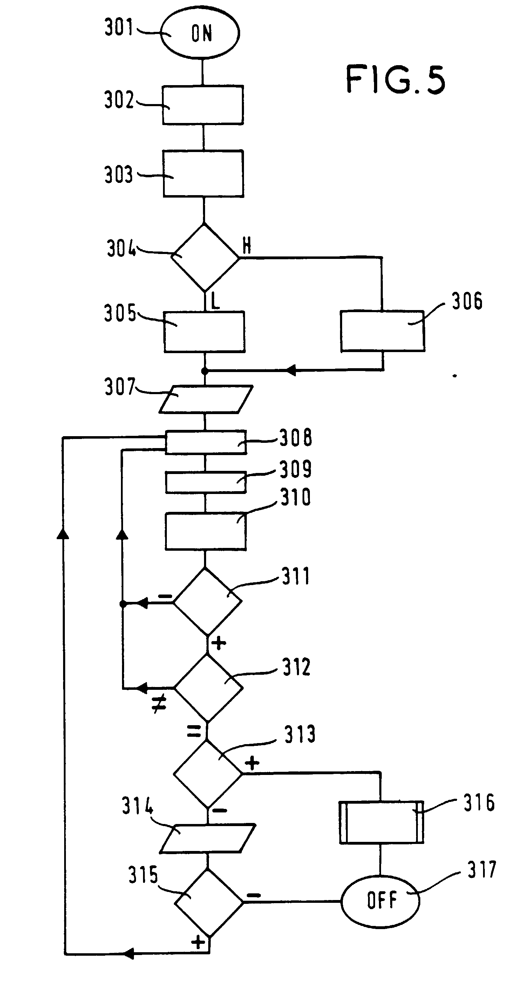

Sur la figure 5, on a représenté le diagramme des opérations successives mises en oeuvre pour calibrer un convertisseur. Les opérations se succèdent de la manière suivante en fonction des références portées sur le diagramme :

- de 301 à 311 les opérations sont identiques respectivement à celles référencées 201 à 211 sur la figure 4.
- en 312, si la comparaison révèle que les valeurs des tensions de la boucle courante et de la boucle précédente sont différentes, on recommence une boucle.

Ceci permet la validation par double parcours de la boucle. On évite ainsi que l'opérateur règle pendant la simulation.

- si la comparaison révèle une identité de valeurs, on passe en 313 où on effectue la comparaison entre les valeurs mesurées des tensions et les valeurs théoriques. En fonction de la précision du convertisseur, la réponse sera positive (+) ou négative (-)
- en cas de réponse négative, on passe en 314 pour afficher la courbe réelle afin de guider l'opérateur pour les réglages.
- en 315, on relance la vérification (+) ou on l'arrête (-) si on aboutit à une impossibilité de réglage.
- en cas de réponse positive lors de la comparaison (en 313), on passe en 316 pour effectuer le test de la chaîne complète
- en 317, les opérations sont terminées.

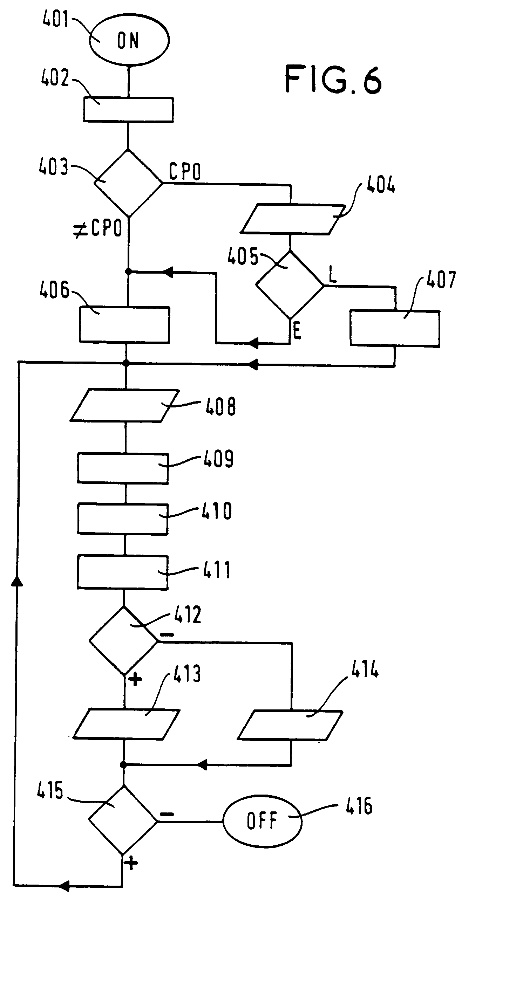

Sur la figure 6, on a représenté le diagramme des opérations successives mises en oeuvre pour vérifier la précision d'un convertisseur pour une température choisie dite "de process". Les opérations se succèdent de la manière suivante en fonction des références portées sur le diagramme :

- en 401, on valide (ON) le cycle de vérification
- en 402, on effectue les initialisations. Les paramètres d'entrée sont les informations concernant la sonde, c'est-à-dire les valeurs $R_o$, A et B, les indications concernant le bas de gamme (BG) et le haut de gamme (HG), une température dite de process (Tp) qui est le point pour lequel on veut connaître la précision de conversion, le type de palier
- en 403, on sélectionne le type de palier, soit CPO, soit les autres type ($\neq$ CPO)
- s'il s'agit d'un palier CPO, en 404 on effectue la saisie du choix de la gamme de mesure : large (L) ou étroite (E)
- en 405, on sélectionne selon la gamme de mesure choisie, par exemple H = -12,5 volts et L = -2,5 volts pour une gamme large et H = 0,5 volt et L = 0,1 volt pour une gamme étroite
- on passe ensuite en 406 ou 407 selon la gamme choisie
- en 408, on effectue la saisie de la température de process Tp, une étape dite "vérification cohérence minimale" vérifie que la saisie manuelle n'est pas aberrante

- en 409, on simule la résistance de sonde correspondant à Tp. A ce stade existe une temporisation de 0,3 seconde (stabilisation de la simulation)
- en 410, on mesure la tension de sortie U du convertisseur
- en 411 s'effectue la conversion de la tension lue en valeur de température T selon l'équation suivante :

$$T = BG + \frac{U - L}{H - L} \times (HG - BG)$$

- en 412, on s'assure que la comparaison est bonne (+) ou mauvaise (-)
- si la comparaison est bonne, on passe en 413 pour l'affichage de la mention "précision satisfaisante" ainsi que pour la valeur de la température
- si la comparaison est mauvaise, on passe en 414 pour l'affichage de la mention "mauvaise précision" ainsi que pour la valeur de la température
- en 415, on détermine si on veut (+) un autre test auquel cas on effectue un nouveau cycle, ou si on ne veut pas (-) d'autre test (pour une autre température de process) auquel cas on passe en 416 (OFF) pour la fin des opérations.

Une autre fonction à vérifier est la fonction sommateur d'une chaîne. Il s'agit de vérifier que la sortie sommateur réponde bien à l'équation suivante avec le degré de précision requis :

$$V_s = G_1 \, V_1 + G_2 \, V_2 + V_p$$

où $G_1$, $G_2$ et $V_p$ sont des paramètres connus du sommateur, $V_1$ et $V_2$ sont les tensions d'entrées, du sommateur et $V_s$ sa tension de sortie. Les entrées $V_1$ et $V_2$ sont obtenues par simulation des résistances de sondes en entrée de chaîne.

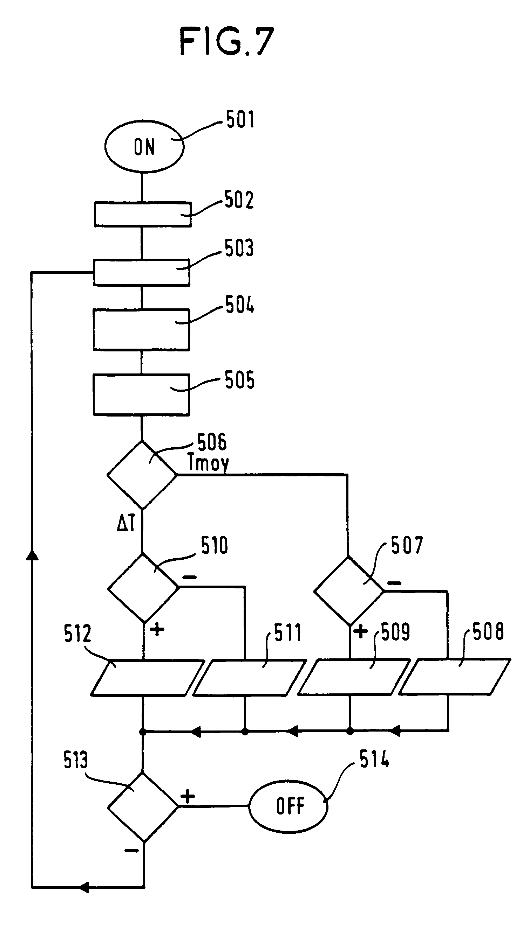

Sur la figure 7, on a représenté le diagramme des opérations successives mises en oeuvre pour vérifier un sommateur de température. Le rôle d'un sommateur est de délivrer soit une température moyenne entre une branche chaude et une branche froide, soit un écart de température entre les branches. Les opérations se succèdent de la manière suivante en fonction des références portées sur le diagramme :

- en 501, on valide (ON) le cycle de vérification
- en 502, on effectue les initialisations dont la mise en mémoire des 5 valeurs de résistance Ri à simuler pour chaque simulateur
- en 503, on incrémente i
- en 504, on effectue le programmation de résistances Ri pour une première sonde et pour une seconde sonde
- en 505 on effectue la lecture des tensions $Vi_1$ et $Vi_2$ (entrées du sommateur) $Vi_s$ (sortie du sommateur)
- en 506 on détermine le type de sommateur envisagé, soit pour délivrer une température moyenne (Tmoy), soit pour délivrer un écart de température ($\Delta$T)
- on passe en 507 pour vérifier le critère de température moyenne
- si ce critère n'est pas satisfaisant (-), on passe en 508 pour l'affichage de la mention "critère non satisfait au point i" avec indication de l'écart
- si ce critère est satisfaisant (+), on passe en 509 pour l'affichage de la mention "critère satisfait au point i" avec indication de l'écart
- on passe en 510 pour vérifier le critère d'écart de température
- si ce critère n'est pas satisfaisant (-), on passe en 511 pour l'affichage de la mention "critère non satisfait au point i" avec indication de l'écart
- si ce critère est satisfaisant (+), on passe en 512 pour l'affichage de la mention "critère satisfait au point i" avec indication de l'écart
- dans tous les cas, on passe en 513 pour continuer ou non l'itération
- si l'itération n'est pas terminée (-), on retourne en 503
- si l'itération est terminée (+) on passe en 514 pour la fin des opérations (OFF).

Le réglage du sommateur consiste à affecter aux paramètres $G_1$, $G_2$, $V_p$ des valeurs déterminées. A partir de trois injections distinctes, le logiciel calcule les paramètres introduits et les affiche pour l'opérateur. L'opérateur procède au réglage d'un paramètre à la fois $V_p$, $G_1$, $G_2$ et relance le cycle de calcul. Le cycle se déroule autant de fois qu'il est nécessaire pour obtenir les trois réglages. Les injections sont les suivantes :

1ère étape : $V_{s1} = G_1 V_{11} + G_2 V_{21} + V_p$
2ème étape : $V_{s2} = G_1 V_{12} + G_2 V_{22} + V_p$ avec $V_{12} = V_{11}$
3ème étape : $V_{s3} = G_1 V_{13} + G_2 V_{23} + V_p$ avec $V_{22} = V_{23}$

Les affichages sont les les suivants :

$$G_1 = (V_{s3} - V_{s2}) / (V_{13} - V_{11})$$

$$G_2 = (V_{s1} - V_{s2}) / (V_{21} - V_{22})$$

$$V_p = V_{s2} - G_1 V_{12} - G_2 V_{22}$$

Après ce réglage, un test global de chaîne est amorcé.

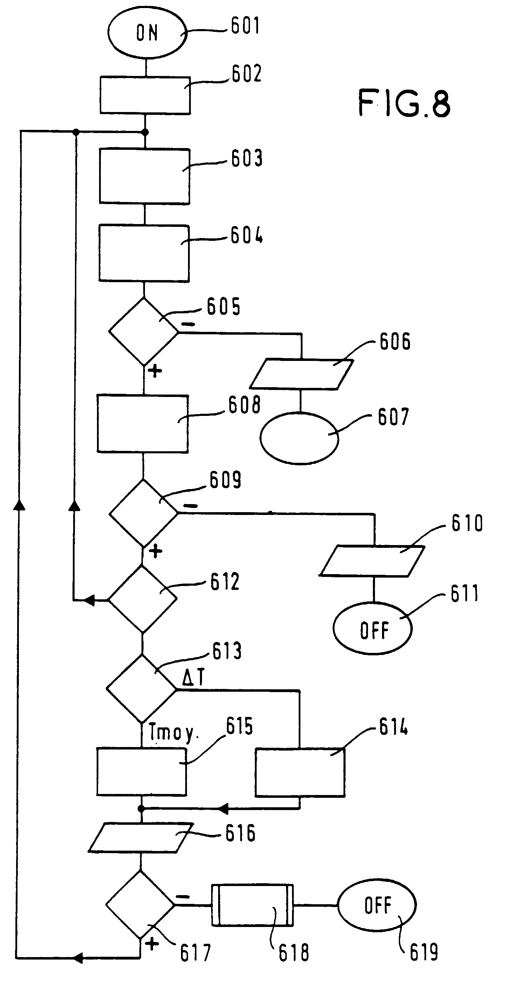

Sur la figure 8, on a représenté le diagramme des opérations successives mises en oeuvre pour régler un sommateur de température. Les opérations se succèdent de la manière suivante en fonction des références portées sur le diagramme :

- en 601, on valide (ON) le cycle de réglage
- en 602, on effectue les initialisations dont la valeur de la température simulée en pourcentage de la gamme. Les paramètres d'entrée sont les informations concernant chaque sonde ($R_o$, A et B) ainsi que les indications concernant le bas de gamme (BG) et le haut de gamme (HG) de température de la branche.
- en 603, on réalise des simulations des résistances de sonde $R_1$ et $R_2$, par exemple $R_1(1/3)$ et $R_2(2/3)$, c'est-à-dire que la sonde portant le numéro d'ordre 1 dans la chaîne sera simulée pour une valeur représentant en pourcentage le tiers de la gamme et que la sonde portant le numéro d'ordre 2 dans la chaîne sera simulée pour une valeur représentant en pourcentage les deux tiers de la gamme. Après une temporisation de 0,3 seconde on mesure les tensions $V_{11}$, $V_{21}$ et $V_{s1}$. Pour la sonde 1, on aura donc :

$$R_1(1/3) = R_o [1+A(BG+1/3(HG - BG)) + B(BG+1/3 (HG-BG))^2]$$

- en 604, on réalise la simulation de $R_2$ (1/3) en conservant $R_1(1/3)$. Après une temporisation de 0,3 seconde, on mesure $V_{12}$ $V_{22}$ et $V_{s2}$.
- en 605 on vérifie si $V_{11} = V_{12}$
- si l'égalité n'est pas vérifiée (-), on passe en 606 pour l'affichage de la mention "problème simulation ou mesure", puis en 607 (OFF) pour la fin des opérations.
- si l'égalité est vérifiée (+), on passe en 608 pour réaliser la simulation de $R_1(2/3)$ en conservant $R_2(1/3)$. Après une temporisation de 0,3 seconde, on mesure $V_{13}$, $V_{23}$ et $V_{s3}$
- en 609, on vérifie si $V_{22} = V_{23}$
- si l'égalité n'est pas vérifiée (-), on passe en 610 pour l'affichage de la mention "problème simulation ou mesure", puis en 611 (OFF) pour la fin des opérations.
- si l'égalité est vérifiée (+), on passe en 612 pour une comparaison boucle courante-boucle précédente. Il s'agit d'une comparaison par double parcours de la boucle pour éviter que l'opérateur règle pendant la simulation. Si la comparaison n'est pas bonne, on retourne en 603. Si la comparaison est bonne, on passe en 613.
- en 613, on détermine le type de sommateur envisagé, soit pour délivrer une température moyenne (T moy), soit pour délivrer un écart de température ( $\Delta T$)
- on passe en 614 pour vérifier le critère $\Delta T$. Dans ce cas on réalise les calculs suivants :

$$G_1 = (V_{s3} - V_{s2}) / (V_{13} - V_{11})$$

$$G_2 = (V_{s1} - V_{s2}) / (V_{22} - V_{21})$$

$$V_p = V_{S2} - G_1 V_{12} + G_2 V_{22}$$

- on passe en 615 pour vérifier le critère T moy. Dans ce cas on réalise les calculs suivants :

$$G_1 = (V_{s3} - V_{s2}) / (V_{13} - V_{11})$$

$$G_2 = (V_{s1} - V_{S2}) / (V_{21} - V_{22})$$

$$V_p = V_{S2} - G_1 V_{12} - G_2 V_{22}$$

- on passe en 616 pour l'affichage des valeurs courantes
- en 617 on détermine s'il faut continuer (+) le réglage auquel cas on repart en 603, ou arrêter (-) le réglage auquel cas on passe en 618 pour le test de la chaîne complète puis en 619 pour la fin des opérations (OFF).

Le test global de chaîne enchaîne la vérification de tous les modules successifs de la chaîne. Pour cela il est nécessaire de raccorder tous les signaux utiles au multiplexeur. Ce raccordement pourra être guidé par le logiciel. Lorsque la chaîne comprend un sommateur, la vérification débute par le test des deux chaînes en amont des sommateurs, se poursuit par le test du sommateur et se termine par les éléments de chaîne en aval.

En fin de cycle, le programme peut afficher un tableau récapitulatif fournissant les valeurs mesurées ou saisies manuellement par l'opérateur, les valeurs théoriques attendues, ainsi que le diagnostic global de chaîne, les modules en défaut.

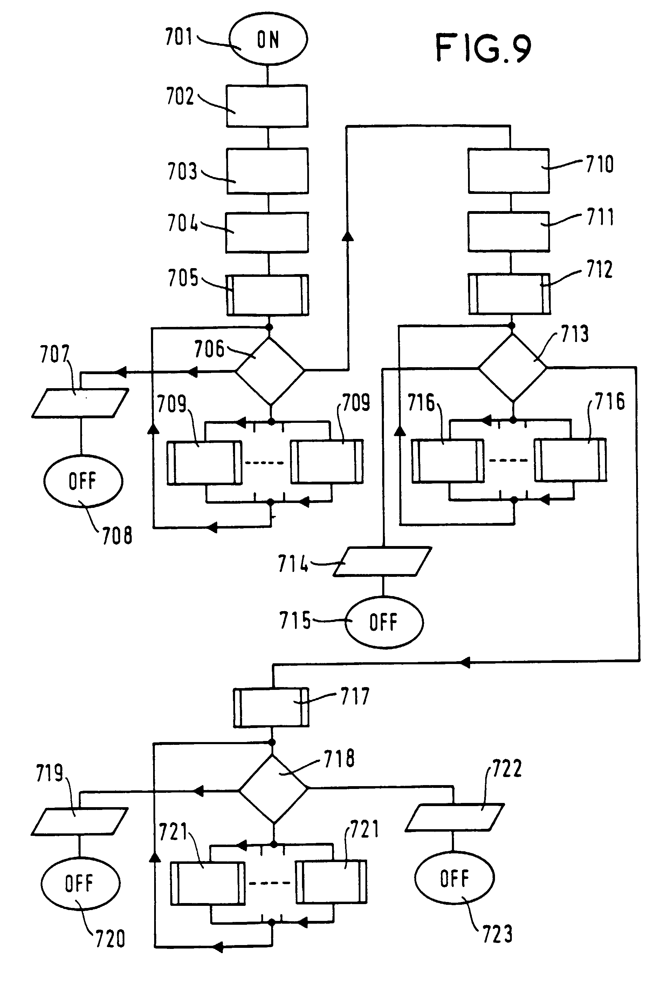

Le cycle de test pourra se dérouler selon le diagramme représenté à la figure 9. Les paramètres d'entrée sont les informations concernant les sondes : $R_o$, A, B, les indications de bas de gamme (BG) de température et de haut de gamme (HG), les températures d'interpolation basse (TB) et haute (TH). S'il y a un sommateur, on introduit les informations le concernant : $G_1$, $G_2$ et $V_p$. On précise aussi le chaînage des modules de la chaîne (branche par branche s'il y a deux branches).

Les opérations se succèdent de la manière suivante en fonction des références portées sur le diagramme :

- en 701, on valide le cycle de test
- en 702, on effectue les initialisations
- en 703, on calcule les deux résistances d'interpolation, les cinq résistances de la droite de linéarisation : $R_{(i)}$ pour la branche i
- en 704, on réalise la conversion des résistances en tensions attendues $V_{(i)}$
- en 705, on effectue la vérification du convertisseur de la branche 1
- en 706, on détermine sur quel type de module suivant doit porter le test.
- si aucun autre module ne doit être testé, on passe en 707 pour l'affichage de la mention "fin vérification" et des valeurs relevées, puis en 708 pour la fin des opérations (OFF)
- on peut choisir de vérifier des modules tels que 709 (modules isolement, indicateurs, carte d'adaptation, convertisseur courant-tension, etc.) et revenir en 706
- on peut choisir de vérifier la fonction sommateur et dans ce cas on passe en 710 puis 711 et 712 qui correspondent respectivement aux références 703 à 705 mais pour la branche 2
- en 713, on détermine pour la branche 2 sur quel type de module suivant doit porter le test
- si aucun autre module ne doit être testé, on passe en 714 pour l'affichage d'un message d'erreur, puis en 715 pour la fin des opérations (OFF)
- on peut choisir de vérifier des modules tels que 716 correspondant aux modules 709 et revenir en 713
- on peut alors choisir de vérifier le sommateur en passant en 717
- après vérification du sommateur, on passe en 718 pour déterminer sur quel module doit être poursuivi le test.
- si aucun autre module ne doit être testé, on passe en 719 pour l'affichage de la mention "fin vérification" et des valeurs relevées puis en 720 pour la fin des opérations (OFF)
- on peut choisir de vérifier des modules tels que 721 correspondant aux modules 709 et 716 et revenir en 718
- on peut choisir de vérifier la fonction sommateur auquel cas on passe en 722 pour l'affichage d'un message d'erreur, puis en 723 pour la fin des opérations (OFF).

Le testeur de chaîne de température selon la présente invention présente du fait de sa conception les avantages suivants :

- pas de déconnexion des lignes des sondes aux borniers des armoires,
- pas de manipulation pour simuler les valeurs de résistances, pour reporter les résultats de mesure, pour faire le diagnostic
- l'intervention des opérateurs pour effectuer les raccordements des points de mesures est guidée à l'aide d'instructions ou de graphiques apparaissant sur l'écran du testeur
- à la fin de l'essai, il existe la possibilité d'imprimer les données enregistrées pour la constitution du rapport de fin d'intervention
- le choix des appareils du banc de métrologie assure une précision de mesure supérieure d'un facteur 4 à la mesure traditionnelle
- plus grande rapidité d'exécution liée à la combinaison de plusieurs configurations d'essais dans un même appareil
- simplification de la mise en oeuvre du matériel sur site
- possibilité d'extension des applications pour la vérification de sondes type thermocouples et de leurs convertisseurs, pour la vérification de la précision globale de chaîne analogique avec d'autres types de sondes donc de simulateurs.

En utilisant des appareils modernes pilotés par micro-ordinateur, la possibilité d'erreur des opérateurs est fortement réduite, la précision de la mesure est améliorée, la rédaction des compte-rendus peut être partiellement automatisée, les données peuvent être mémorisées. La fiabilité des essais est améliorée et le temps d'exécution est réduit.

**Revendications**

1. Méthode de test de chaînes de température, une chaîne comportant une thermosonde (10, 20) et un convertisseur (11, 21) reliant la thermosonde (10, 20) au reste de la chaîne, la méthode comportant des opérations de simulation de résistances (12, 22), et de mesures de tensions et de résistances (4), caractérisée en ce que la méthode comprend les étapes suivantes :

   - retrait du convertisseur (11, 21) de la chaîne de température,
   - branchement en sortie de la thermosonde (10, 20) des entrées d'un module de raccordement (13, 23) dont les sorties sont connectées à de premières entrées d'un multiplexeur (3),
   - branchement aux entrées du convertisseur (11, 21) des sorties d'un simulateur de résistances (12, 22), les sorties du convertisseur (11, 21) étant reliées à de secondes entrées d'un multiplexeur (3),
   - test automatisé de la thermosonde (10, 20) et de son convertisseur (11, 21) mené par un calculateur (1) gérant le simulateur de résistances (12, 22), les mesureurs de tensions et de résistances (4) par l'intermédiaire du multiplexeur (3).

2. Méthode selon la revendication 1, caractérisée en ce que les opérations de mesure de résistances sur la thermosonde comprennent la mesure de la résistance d'isolement (Ri), la mesure de résistances accessibles entre les sorties de la thermosonde pour en déduire la résistance de sonde (R) et les résistances de lignes (r1, r2, r3, r4).

3. Testeur de chaînes de température pour la mise en oeuvre de la méthode selon la revendication 1, une chaîne comportant une thermosonde (10, 20) et un convertisseur (11, 21) reliant la thermosonde (10, 20) au reste de la chaîne, le testeur comprenant des moyens de simulation de résistances (12, 22) et des moyens de mesures de tensions et de résistances (4), caractérisé en ce que le testeur comprend :

   - au moins un module de raccordement (13, 23) reliant les sorties de thermosonde (10, 20) à de premières entrées d'un multiplexeur (3),
   - au moins un simulateur de résistances (12, 22) branché aux entrées d'un convertisseur (11, 21), les sorties du convertisseur (11, 21) étant reliées à de secondes entrées du multiplexeur (3),
   - un calculateur (1) pour gérer le simulateur de résistances (12, 22), les mesureurs de tensions et de résistances (4) par l'intermédiaire du multiplexeur (3).

**Patentansprüche**

1. Verfahren zum Prüfen von Temperaturmeßschaltungen, wobei eine Schaltung eine Thermosonde (10, 20) und einen Wandler (11, 21) aufweist, der die Thermosonde (10, 20) mit dem Rest der Schaltung verbindet, wobei Widerstände simuliert werden (12, 22) und Spannungs- und Widerstandsmessungen (4) durchgeführt werden, **dadurch gekennzeichnet**, daß das Verfahren folgende Schritte aufweist:

   - Entfernen des Wandlers (11, 21) aus der Temperaturmeßschaltung,
   - Anschluß von Eingängen eines Verbindungsmoduls (13, 23) an dem Ausgang der Thermosonde (10, 20), wobei die Ausgänge des Moduls mit ersten Eingängen eines Multiplexers (3) verbunden sind,
   - Anschluß an den Eingängen des Wandlers (11, 21) von Ausgängen eines Widerstandsimulators (12, 22), wobei die Ausgänge des Wandlers (11, 21) an zweiten Eingängen des Multiplexers (3) angeschlossen sind,
   - automatisches Prüfen der Thermosonde (10, 20) und dessen Wandlers (11, 21), durchgeführt durch einen Rechner (1), der den Widerstandsimulator (12, 22) sowie die Meßeinrichtungen der Spannungen und Widerstände (4) über den Multiplexer (3) steuert.

2. Verfahren nach Anspruch 1, dadurch gekennzeichnet, daß die Schritte zur Messung des Widerstandes an der Thermosonde die Messung des Isolationswiderstandes (Ri), die Messung des Widerstands zwischen den Ausgängen der Thermosonde, um den Widerstand der Sonde (R) zu bestimmen und die Messung der Widerstände in Reihe (r1, r2, r3, r4) umfaßt.

3. Vorrichtung zum Prüfen von Temperaturmeßschaltungen nach dem Verfahren nach Anspruch 1, wobei die Schaltung eine Thermosonde (10, 20) und einen Wandler (11, 21) aufweist, mit dem die Thermosonde (10, 20) mit dem Rest der Schaltung verbunden ist, wobei die Prüfvorrichtung Mittel zur Simulation von Widerständen (12, 22) und Mittel zur Messung von Spannungen und Widerständen (4) aufweist,

**gekennzeichnet durch**

- mindestens ein Verbindungsmodul (13, 23), welches die Ausgänge der Thermosonde (10, 20) mit ersten Eingängen eines Multiplexers (3) verbindet,
- mindestens einen Widerstandsimulator (12, 22), der an die Eingänge eines Wandlers (11, 21) geschaltet ist, wobei die Ausgänge des Wandlers (11, 21) an zweiten Eingängen des Multiplexers (3) angeschlossen sind, und
- einen Rechner (1), der den Widerstandsimulator (12, 22) und die Meßvorrichtungen zur Messung der Spannungen und der Widerstände (4) durch den Multiplexer (3) steuert.

## Claims

1. A method of testing temperature systems, a system comprising a temperature probe (10, 20) and a converter (11, 21) connecting the temperature probe (10, 20) to the remainder of the system, the method including operations of simulating resistances (12, 22), and of measuring voltages and resistances (4), the method being characterized in that it comprises the following steps:

   - removing the converter (11, 21) from the temperature system;
   - connecting the inputs of a coupling module (13, 23) to the outputs of the temperature probe (10, 20), the outputs of the module being connected to first inputs of a multiplexer (3);
   - connecting the outputs of a resistance simulator (12, 22) to the inputs of the converter (11, 21), the outputs of the converter (11, 21) being connected to second inputs of a multiplexer (3); and
   - automatically testing the temperature probe (10, 20) and its converter (11, 21) by means of a computer (1) controlling the resistance simulator (12, 22) and the voltage and resistance measurers (4) via the multiplexer (3).

2. A method according to claim 1, characterized in that the operations of measuring resistances on the temperature probe comprise measuring the insulation resistance (Ri), measuring the resistances available between the outputs of the temperature probe to deduce therefrom the resistance of the probe (R), and measuring the resistances of the lines (r1, r2, r3, r4).

3. A temperature system tester for implementing the method of claim 1, a system comprising a temperature probe (10, 20) and a converter (11, 12) connecting the temperature probe (10, 20) to the remainder of the system, the tester comprising means for simulating resistances (12, 22) and means for measuring voltages and resistances (4), the tester being characterized in that it comprises:

   - at least one coupling module (13, 23) connecting the outputs of the temperature probe (10, 20) to first inputs of a multiplexer (3);
   - at least one resistance simulator (12, 22) connected to the inputs of a converter (11, 21), the outputs of the converters (11, 21) being connected to second inputs of the multiplexer (3); and
   - a computer (1) for controlling the resistance simulator (12, 22), and the voltage and resistance measurers (4) via the multiplexer (3).

# FIG.1

# FIG.2

FIG.3

FIG.4

FIG.5

# FIG.6

# FIG.7

FIG.8

# FIG.9